# EUROPEAN PATENT APPLICATION

(11) **EP 4 674 706 A1**
(43) Date of publication of application: **07.01.2026**
(21) Application number: 25186560.6
(22) Date of filing: 01.07.2025
(51) Int. Cl.: B60T 8/1766, B60T 8/1763, B60W 30/18

(54) **CONTROL METHOD FOR REGENERATIVE BRAKING WITH ANTI-LOCK BRAKING SYSTEM OF A ROAD VEHICLE WITH INDEPENDENT ELECTRIC MOTORS AND RELATED ROAD VEHICLE**

(30) Priority: 05.07.2024 IT 202400015613
(71) Applicant: FERRARI S.p.A., 41100 Modena (IT)
(72) Inventor: VARISCO, Stefano, 41100 MODENA (IT); CANESTRI, Jacopo, 41100 MODENA (IT); MINCIGRUCCI, Francesca, 41100 MODENA (IT); PRETAGOSTINI, Francesco, 41100 MODENA (IT)
(74) Representative: Studio Torta S.p.A.

(57) **Abstract**

A control method for regenerative braking of a road vehicle comprising the steps, for each driving wheel (4, 5), of: estimating a grip factor (G); defining or collecting a vertical load (Fz); computing a value of a maximum braking capacity (MRT) depending on the grip factor (G) and the vertical load (Fz); controlling a braking system (13), following a request for braking, so as to actuate a hydraulic unit (18) to exert a first braking torque (mBT) and so as to actuate in regenerative electric braking each wheel at least according to the respective maximum braking capacity (MRT) value and in particular the first braking torque (mBT); and modulating the first braking torque (mBT) and/or the second braking torque (eBT) so that their sum is equal to or less than the respective maximum braking capacity (MRT) value.

## Description

### CROSS-REFERENCE TO RELATED APPLICATIONS

This patent application claims priority from Italian patent application no. 102024000015613 filed on July 5, 2024, the entire disclosure of which is incorporated herein by reference.

### TECHNICAL FIELD

The present invention relates to a control method for regenerative braking at least partially simultaneous with an anti-lock braking system of a road vehicle with independent electric motors acting on at least two (in particular on four) wheels; the present invention also relates to a related road vehicle configured to perform such method.

### PRIOR ART

Methods are known for the regeneration, by means of the so-called regenerative braking, of electrical energy in vehicles equipped with electric propulsion provided by high-voltage batteries.

It is, in fact, known that a part of the braking action, normally allocated to the effect of friction between a brake pad placed in contact with a brake disc by means of the action of a hydraulic force produced by the driver (by pressing on the brake pedal) and assisted by various technical solutions (brake boosters, hydraulic pumps), is supported by an electric braking exerted by an electric motor placed in mechanical connection with the wheels (according to various architectural layouts that are known and not further detailed below).

Generally, the energy regenerated in this manner by the aforesaid electric motor is reintroduced into the high-voltage battery, causing the effect of increasing its state of charge (SOC) for a future return in situations of electric propulsion.

According to the solutions of the prior art, the regeneration of electrical energy is considerably limited, especially in high-performance vehicles, so as not to exceed a predetermined deceleration value (even when the vehicle is equipped with a powertrain system with absorption potential higher than said predetermined value).

Furthermore, the solutions of the prior art provide for a fixed division between the front and rear axle, which has not always proved to be optimal, limiting the energy regeneration potential and therefore the performance of the road vehicle.

In addition, according to the architectures of the known type, the regeneration of energy is sized to be fixed in standard braking conditions, and to be disabled in conditions of braking with ABS, providing, in these cases, for modulating the braking force exclusively by means of the hydraulic/mechanical circuit that manages conventional brakes.

However, in high-performance vehicles, there could be an over-abundance of regenerated energy, due to the major accelerations in play, and this can determine a factor of absolute importance even in performance. In particular, "emergency" braking, i.e. the braking in which the ABS enters into operation, is even more frequent in high-performance vehicles that travel on a track.

There is therefore a need for an improved system of management of the electrical energy, which becomes an important resource not only in terms of distribution of the electric torque to the motors, but also in terms of regeneration of the electrical energy in braking. In fact, having a greater quantity of energy available allows the performance on the track to be improved, for example by allowing the supply of a greater torque in acceleration for completion of a race.

### DESCRIPTION OF THE INVENTION

The object of the present invention is to provide a control method for regenerative braking of a road vehicle with independent electric motors acting on at least two, in particular four, wheels and a related road vehicle, which are free of the drawbacks described above, are easy and economical to manufacture and, in particular, allow performance to be maximised during travel on a track, without making the road vehicle unstable.

According to the present invention, a control method for regenerative braking of a road vehicle with independent electric motors acting on at least two, in particular four, wheels and a related road vehicle is provided, according to what is claimed in the independent claims that follow and, preferably, in any one of the claims that are directly or indirectly dependent upon the independent claims.

The claims describe preferred embodiments of the present invention and form an integral part of this description.

### BRIEF DESCRIPTION OF THE DRAWINGS

The present invention will now be described with reference to the appended drawings, which illustrate a non-limiting embodiment thereof, wherein:
- Figure 1 is a schematic and plan view of a road vehicle according to the present invention and provided with four separate and independent motors;
- Figure 2 is a schematic diagram of a non-limiting embodiment of the method according to the present invention;
- Figure 3 shows a diagram of a braking of the vehicle of Figure 1 in which the ABS is activated in combination with a regenerative braking.

### PREFERRED EMBODIMENTS OF THE INVENTION

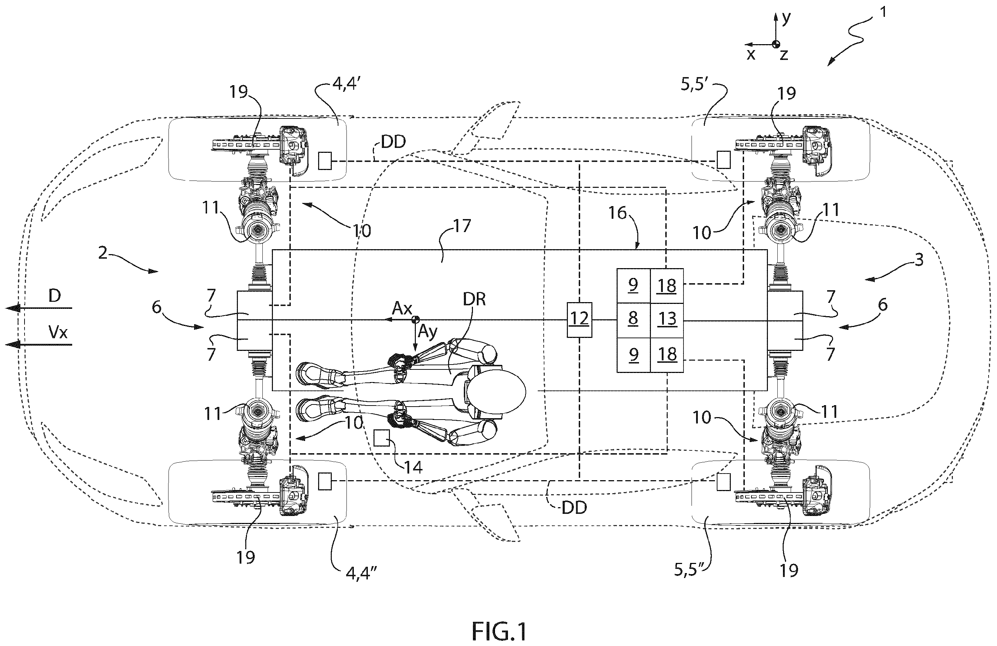

In Figure 1, the number 1 indicates, in its entirety, a road vehicle, in particular a motor vehicle, provided with a front axle 2 and a rear axle 3.

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with each other without deviating from the scope of protection of this application as described below.

It is specified that, in the description that follows, expressions such as "above", "below", "front", "rear" and similar are used with reference to conditions of normal travel of the road vehicle 1 along the normal direction of travel D.

As shown in the non-limiting embodiment of Figure 1, it is also possible to define:
- a longitudinal axis X, integral with the vehicle 1 and arranged, in use, horizontal and parallel to a normal direction of travel D of the vehicle 1;
- a transverse axis Y, integral with the vehicle 1 and arranged, in use, horizontal and orthogonal to the axis X; and
- a vertical axis Z, integral with the vehicle 1 and arranged, in use, vertical and orthogonal to the axes X, Y.

The road vehicle 1 comprises four wheels 4, 5 divided into pairs between the front axle 2 and the rear axle 3. In detail, of the four wheels 4, 5, at least two, in particular all four, are driving wheels.

In other words, the vehicle 1 comprises two front (driving) wheels 4, forming part of the front axle 2, and two rear (also driving) wheels 5, forming part of the rear axle 3.

In particular, the vehicle 1 can be front-wheel drive, i.e. with only the front wheels 4 being driving wheels, rear-wheel drive, i.e. with only the rear wheels 5 as driving wheels, or four-wheel drive, with all the wheels 4, 5 being driving wheels, as illustrated in the non-limiting embodiment of the appended drawings.

The vehicle further comprises a powertrain system 6, which in turn comprises two or four electric motors 7 (based on the number of driving wheels 4, 5 and the type of direct or indirect implementation - through a differential), each of which is connected to a respective wheel 4, 5 by an opportune transmission system that allows the torque provided by each wheel 4, 5 to be varied independently from the others and in an adjustable manner according to predetermined logics. For this purpose, according to several non-limiting embodiments, respective electric motors 7 are present for each wheel, whereas according to other non-limiting embodiments, an active differential (known and therefore not further detailed below) is present which allows different torques to be delivered to (and received from) the wheels of a same axle 3 or 4.

In particular, according to a preferred but non-limiting embodiment, each wheel 4, 5 is rotatably driven by a respective electric motor 7 connected to it.

The electric motors 7 are mechanically coupled to the wheels 4, 5 and are configured to deliver and receive driving torque to or from the wheels 4, 5 themselves, based on the drive function or generative function that are exerted respectively in acceleration and deceleration/braking.

Each wheel 4 or 5 is mechanically connected to a chassis of the road vehicle 1 by means of a suspension 10 (partially illustrated in Figure 1), which is provided with an electronically controlled shock absorber 11, i.e. provided with an electric actuator that allows the damping of the electronically controlled shock absorber 11 to be varied (i.e. increased or decreased). By way of example, the electric actuator of each electronically controlled shock absorber 11 could comprise one or more solenoid valves that modulate the size of the holes for passage of the oil inside the electronically controlled shock absorber 11, or could comprise a magnetorheological fluid that alters its physical properties as a function of a magnetic field applied.

In addition, the vehicle 1 comprises electronic control circuitry 8, which comprises one or more electronic control or computation units 9 ("ECU") which, among other things, regulate the behaviour of the road vehicle 1 both on a straight road and when travelling around a curve, intervening, as described in further detail below, on the torque generated by the electric motors 7 thanks to the driving wheels 4, 5 in deceleration. Physically, the control circuitry 8 may comprise a single device or several devices separate from each other and communicating by means of the CAN network of the road vehicle 1.

Advantageously, the electronic control circuitry 8 is configured to estimate, for each driving wheel 4, 5, independently of the other driving wheels 4, 5, a respective grip factor (G) on the ground travelled by the road vehicle 1. In particular, the grip factor G on the ground is calculated using known methods and is therefore not further detailed below. Such grip factor G can be both estimated and collected according to known techniques, as described, for example, in Italian patent application 102021000020948 filed by the same Applicant.

Furthermore, the electronic control circuitry 8 can be configured to define or collect, for each driving wheel 4, 5, independently of the other driving wheels 4, 5, a respective vertical load Fz acting on it. In particular, the load Fz is also defined or collected by means of known techniques that therefore are not further detailed below (i.e. by measuring the load, or force Fz, with special sensors or by estimating it through modelling of the road vehicle 1), as described, for example, in Italian patent application 102021000020948 filed by the same Applicant.

The electronic control circuitry 8 is also configured to compute, for each driving wheel 4, 5, a value of a maximum braking capacity MRT (regenerative, i.e. maximum regenerative torque) depending at least on the respective grip factor G and the respective vertical load Fz. In particular, the maximum braking capacity is determined using known methods and is therefore not further detailed below. For example, the maximum braking capacity can be defined in terms of torque.

Preferably but not in a limiting manner, the vehicle 1 further comprises a collection system 12 for collecting data DD, which is connected to the control circuitry 8 and is configured to collect a plurality of data DD on vehicular dynamics. In particular, the data DD collected by the data collection system 12 comprises at least the speed Vx (longitudinal) of the vehicle 1, which is preferably, but not in a limiting manner, collected by means of speed sensors arranged at the wheels 4, 5; the requests of the driver DR, for example how long and in what way an accelerator or brake pedal is pressed or the steering wheel turned; and the longitudinal accelerations Ax and transverse accelerations Ay, for example collected by means of one or more inertia measurement units (known in themselves and not detailed further), of the road vehicle 1.

The road vehicle 1 further comprises a braking system 13, itself comprising at least one braking element 14 that can be actuated by the driver to demand braking, in particular a brake pedal 15.

Advantageously, the braking system 13 also comprises a hydraulic unit 18, and mechanical brakes 19, controlled by the hydraulic unit 18.

In detail, the braking system 14 is connected to the control circuitry 8 and is configured to be controlled by it.

Advantageously, the control circuitry 8 is further configured to control the braking system 13, following a request for braking (in particular emergency braking, i.e. a braking in which the brake pedal 15 is suddenly and forcibly pressed) by the driver DR via the braking element 14, so as to actuate the hydraulic unit 18 to exert a braking torque mBT on each driving wheel 4, 5.

In detail, the control circuitry 8 is further configured to control the braking system 13, in addition to the respective braking torque mBT, to actuate in regenerative electric braking, by delivering a respective braking torque eBT, each driving wheel 4, 5 and thus the respective electric motor 7, as a function of the respective maximum braking capacity MRT value and in particular the torque mBT, so as to generate regenerative electrical energy.

In other words, for example, when the driver DR presses the brake pedal 15, the control circuitry 8, in particular the control unit 9, controls in braking each of the electric motors 7 with a respective electric braking torque eBT (or counter-electromotive force), thanks to which it is possible to generate, using the electric motors 7 as generators, regenerative electrical energy, i.e. regenerated by converting the kinetic energy of the driving wheels 4, 5 into electrical energy during braking.

Furthermore, the control circuitry 8 is configured to modulate, at least for each driving wheel 4, 5 (therefore in the case illustrated for all four wheels 4, 5), the braking torque mBT and/or the braking torque eBT, so that the sum between the hydraulic braking torque mBT and the electric braking torque eBT is, instant by instant, equal to or less than the respective maximum braking capacity value MRT (for the respective wheel).

In particular, the hydraulic unit 18 comprises an anti-lock braking system ABS (of known type and therefore not further detailed below), which, by activating, causes modulation of the first braking torque mBT. In other words, in the case of an emergency braking, for example of the type that is known to activate the anti-lock braking system ABS, the anti-lock braking system ABS controls the mechanical brakes 19 with a triangular modulation of known type, which eases the hydraulic braking torque mBT as soon as it reaches the maximum braking capacity MRT value (for the respective wheel), so as to avoid the locking thereof, thus allowing the wheel 4, 5 to continue rotating without sliding excessively.

In conclusion, the electronic control circuitry 8 is configured to store the aforesaid regenerative electrical energy generated by the regenerative braking of each wheel 4, 5 in a vehicular electrical energy storage system 16 (common between the wheels 4, 5), in particular a vehicular battery pack 17. In other words, the energy generated during braking thanks to the electric motors 7 converges into a main battery pack 17 of the road vehicle 1, for subsequent use in the acceleration phase, so as to increase performance, for example on exiting from a curve on a track.

In accordance with a further aspect of the present invention, a control method for regenerative braking, in particular during use of an anti-lock braking system ABS, of a road vehicle driven by a driver DR is provided. Advantageously but not in a limiting manner, the road vehicle 1, in particular the control circuitry 8, is configured/programmed to perform the method described below.

The method comprises the steps of:
- estimating, by means of the control circuitry 8, in particular by means of at least one of the control or computation units 9, for each driving wheel 4, 5, independently of the other driving wheels 4, 5, the respective grip factor G on the ground travelled by the road vehicle 1;
- defining or collecting, by means of the control circuitry 8, in particular by means of at least one of the control or computation units 9, for each driving wheel 4, 5, independently of the other driving wheels 4, 5, a respective vertical load Fz acting on it;
- computing, by means of the control circuitry 8, in particular by means of at least one of the control or computation units 9, for each driving wheel 4, 5, the value of the maximum braking capacity MRT depending at least on the respective grip factor G and the respective vertical load Fz;
- controlling, by means of the control circuitry 8, in particular by means of at least one of the control or computation units 9, the braking system 13, following an (emergency) braking request from the driver DR (for example via the brake pedal 15), so as to actuate the hydraulic unit 18 to exert the braking torque mBT at least on each driving wheel 4, 5 (in particular on all four wheels 4, 5);
- controlling the braking system 13, so as to actuate in regenerative electric braking, by delivering a respective braking torque eBT, in addition to the respective braking torque mBT, each driving wheel 4, 5 and thus the respective electric motor 7, at least as a function of the respective maximum braking capacity MRT value and in particular the first torque (mBT), so as to generate regenerative electrical energy;
- modulating, at least for each driving wheel 4, 5, the first braking torque mBT and/or the second braking torque eBT so that the sum of the first braking torque mBT and the second braking torque eBT is, instant by instant, equal to or less than the respective maximum braking capacity MRT value;
- storing the regenerative electrical energy generated by the regenerative braking of each wheel 4, 5 in the storage system 17.

In particular, the anti-lock braking system ABS, including the hydraulic unit 18, by activating, causes modulation of the braking torque mBT.

More in particular, therefore, at least in several intervals of time during an emergency braking, the anti-lock braking system ABS causes a variation of the hydraulic braking torque mBT, whereas the electric braking torque eBT (and the maximum braking capacity MRT) remain constant.

Preferably, during the modulating step, for each driving wheel 4, 5, the torque eBT is controlled in concordance with the respective value of the maximum braking capacity MRT of said driving wheel 4, 5.

In particular, therefore, the electric braking torque eBT is commanded to correspond, under predefined conditions, to a predefined regenerative percentage of the respective value of the maximum braking capacity MRT. More in particular, the predefined conditions comprise at least sections of the maximum braking capacity MRT which are constant and/or decreasing over time.

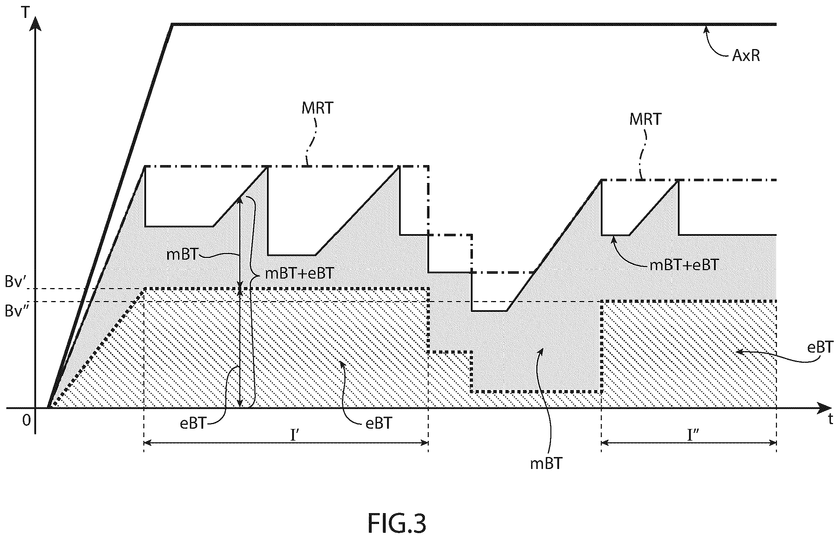

According to several preferred but non-limiting embodiments, therefore, as illustrated in the embodiment of Figure 3, during at least part, in particular during the totality, of activation of the anti-lock braking system ABS, i.e. during modulation (triangular) of the torque mBT, the torque eBT is controlled at a respective base value BV that is constant for each driving wheel 4, 5. For example, it can be seen how the value eBT remains constant at base values BV', BV'' at intervals I', I'' during the emergency braking that produces the graphs shown in Figure 3.

In particular, the base value BV, BV', BV'' corresponds to a predefined percentage of the maximum braking capacity MRT of the respective driving wheel 4, 5. Advantageously but not in a limiting manner, the base value BV, BV', BV'' corresponds at least to 10%, in particular at least to 20%, preferably at least to 30% of the maximum braking capacity MRT of said drive wheel 4, 5.

According to further non-limiting embodiments not shown, the method comprises the further steps of:
- collecting the plurality of data DD on vehicular dynamics; and
- regulating the respective base value BV of the torque eBT as a function of the data DD on vehicular dynamics.

Preferably but not in a limiting manner, during the phase of controlling the braking system 13, at least one right wheel 4', 5' and one left wheel 4", 5'' of the same front axle 2 or rear axle 3 are controlled independently of each other, distributing the braking in percentage differentially between them. In other words, the electric braking torque eBT commanded to the right wheel 4', 5' differs from the electric braking torque eBT commanded to the left wheel 4'', 5''. Accordingly, the electrical energy generated by the right wheel 4', 5' differs with respect to the one generated by the left wheel 4'', 5". Regardless of this difference, the electrical energy is preferably stored in the storage system 16 in order to be delivered to any one of the electric motors 7.

As an alternative or in addition, during the step of controlling the braking system, the wheels 4 (i.e. 4' and 4") of the front axle 2 and the wheels 5 (i.e. 5' and 5") of the rear axle 3 are controlled independently from each other, distributing the braking differentially, for example in percentage, between the front axle 2 and the rear axle 3. In other words, the electric braking torque eBT commanded to the front wheels 4 differs from the electric braking torque eBT commanded to the rear wheels 5. Accordingly, the electrical energy generated by the front wheels 4 differs with respect to the one generated by the rear wheels 5. Regardless of this difference, the electrical energy is preferably stored in the storage system 16 in order to be delivered to any one of the electric motors 7.

Advantageously but not in a limiting manner, the respective electric braking torque eBT delivered to at least one wheel 4, 5 (in particular to all the wheels 4, 5, or at least divided by axle pair 2, 3) is variable dynamically over time (during braking, i.e. while the driver demands braking via the pedal).

In particular, the electric braking torque eBT is variable with update frequencies greater than 3 Hz, particularly greater than 5 Hz; more particularly with update frequencies of 10 Hz or more.

Advantageously but not in a limiting manner, therefore, the respective braking torque eBT delivered by one wheel 5 (i.e. 5', 5''), in particular by both wheels 5, 5', 5'', of the rear axle 3 remains constant or preferably increases as time passes during braking, as the longitudinal speed Vx of the road vehicle 1 decreases.

Preferably but not in a limiting manner, the respective braking torque eBT delivered by one wheel 4 (i.e. 4', 4"), in particular by both wheels 4, 4', 4'', of the front axle 2 remains constant or preferably decreases as time passes during braking, as the speed Vx of the road vehicle 1 decreases.

As illustrated in the appended drawings, the method therefore comprises a step of controlling the braking system 14 so as to actuate, to aid in regenerative braking of the electric motors 7, and therefore in addition to the respective first braking torque eBT, the hydraulic unit 18 to exert the braking torque mBT on each wheel 4, 5, in particular at least partially simultaneously with the braking torque.

Preferably but not in a limiting manner, and as illustrated in Figure 3, the braking torque eBT is exerted (always) simultaneously with the braking torque mBT.

In several non-limiting cases not shown, above a certain longitudinal speed Vx and in the presence of a certain (emergency) braking request by the driver, the braking torque eBT is exerted with a delay with respect to the braking torque mBT, which enters into operation first.

In particular, the braking torque mBT delivered by the hydraulic unit 18 is independent for each wheel 4, 5 respectively of the front axle 2 or the rear axle 3, as a function of the speed of rotation thereof with respect to the longitudinal speed Vx of the road vehicle 1. For example, the speed of each wheel is collected by means of a respective phonic wheel.

Advantageously but not in a limiting manner, the control circuitry 8 is configured to perform the method described in the present description.

In accordance with what has previously been said, therefore, the braking potential of each individual wheel 4, 5 depends on the grip factor G, the vertical load Fz applied on the wheel 4, 5 (or on the respective tyre) and also on any presence of lateral engagement required by the tyre itself (acceleration Ay).

As a result, in dynamic load transfer conditions, such as braking on a straight road (where the load is transferred towards the front axle 2) or braking on a curve (where the load is once again transferred towards the front axle 2, but with a requirement for lateral force on the tyres of the wheels 4, 5, to limit the braking capacity itself), the control circuitry 8 controls the electric motors 7 and the hydraulic unit 18 by dynamically adjusting the portion, i.e. the percentage, of hydraulic braking with respect to electric braking, i.e. the torque mBT with respect to the torque eBT, based on the specific conditions of each individual wheel 4, 5.

Therefore, according to the embodiments described above or a combination thereof, having available an estimator (of known type) of the overall braking capacity of each wheel 4, 5, it is therefore possible (in the absence of ABS control) to distribute the braking action in an improved way (by calibrating/modulating the torques eBT and mBT) and maximising the energy regeneration (if there were to be a fixed distribution of braking torque eBT that is excessive for an individual wheel 4, 5, its reduction or elimination would have to be performed on the entire braking axle 2, 3, losing the possible contribution of the other wheel of the same axle 2, 3).

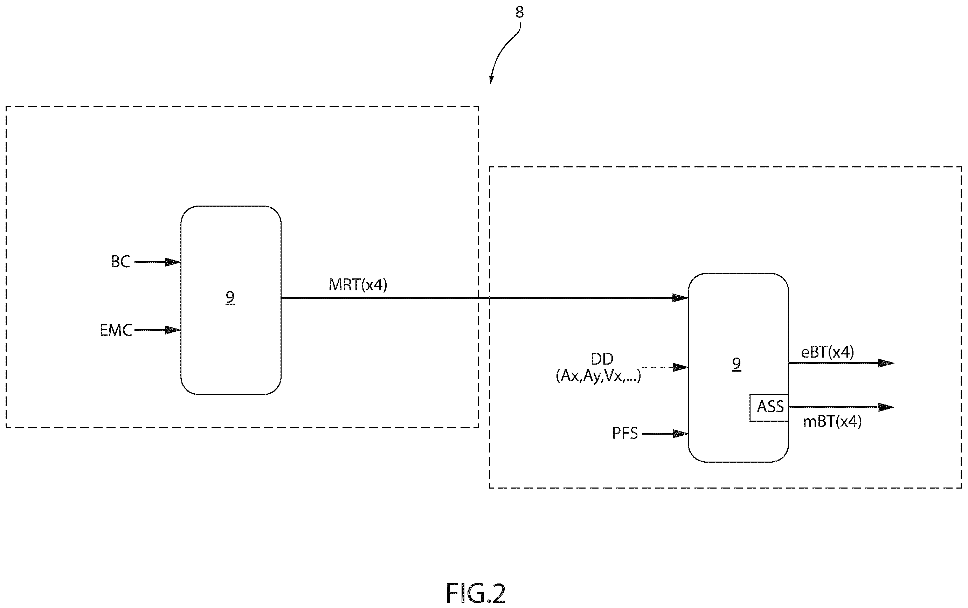

In the non-limiting embodiment of Figure 2, a portion of the control circuitry 8 is schematically illustrated, comprising two control or computation units 9. Following the information flow (indicated by the arrows), the first control unit 9 receives as an input a signal BC relating to the conditions (model, size and status) of the battery pack 17 (and its limits) and an EMC signal, relating to the conditions (model, size and status) of the electric motors 7 (and their limits). Based on such incoming signals, the control unit 9 computes, for each wheel 4, 5 (i.e. four values), the maximum electric braking capacity MRT, which is expressed preferably as the maximum braking torque deliverable by the electric motors 7, also taking into consideration the battery pack 17.

The four values of maximum braking capacity MRT are provided as an input to the second control unit 9 (which may also physically coincide with the first), together with the data DD on dynamics of the road vehicle 1 and a PFS signal relating to the limitations imposed by functional safety of the road vehicle 1 (the so-called Automotive functional safety or FuSa, defined for example by ISO 26262). In addition to these signals, the grip factor G, calculated or estimated as described above and as known, is also considered. Based on these incoming signals, the control unit 9 computes distribution of the regenerative braking between the wheels 4, 5, i.e. the combination of the respective torques eBT and the second torques mBT.

For example, in general, in the case in which there is only one electric axle, the percentage distribution of the electric braking torque is independently adjustable between the right wheel 4', 5' and the left wheel 4", 5'' (whether front or rear axle 6 or 7). This diversified distribution of the braking torque can be delivered both by means of a single electric motor 7 connected to an active differential, itself connected to the wheels, or by means of two respective electric motors 7, one for each wheel 4, 5 of the same axle.

For example, in the case in which both axles 6, 7 are electric, the percentage distribution of the electric braking torque is independently adjustable between the right wheel 4', 5' and the left wheel 4", 5'' (whether front or rear axle 6 or 7) of both axles 6, 7. This diversified distribution of the braking torque can be delivered both by means of a single electric motor 7 for each electric axle connected to an active differential, itself connected to the wheels, or by means of four respective electric motors 7, one for each wheel 4, 5. In this manner, it is possible to adjust independently both the relative percentage distribution between the wheels of the same axle and between the two different axles 6, 7, so as to optimise/maximise the regenerative electrical energy in different situations (straight road, curve, ascent, descent, sloping road or a combination thereof).

It is therefore also possible experimentally to define different distribution strategies of the torque eBT and the torque mBT, based on those that are the aforementioned factors examined.

According to several non-limiting embodiments not shown, the dips in modulation of the mechanical/hydraulic braking torque mBT by the anti-lock braking system ABS correspond preferably to the base value BV of the electric braking torque eBT. In other words, the electric braking torque eBT is modulated so that the dips in modulation of the torque mBT correspond to a hydraulic pressure equal (or close) to zero.

As an alternative or in addition, the electric braking torque eBT is modulated by the control circuitry 8 so that the sum between the electric braking torque eBT and the mechanical/hydraulic braking torque mBT corresponds substantially (minus a safety margin, for example empirical), instant by instant, to the maximum braking capacity MRT of each driving wheel 4, 5 (in particular all four driving wheels).

Although the invention described here above makes particular reference to an example of a precise embodiment, it is not to be considered as limited to said example of an embodiment, as its scope includes all those variants, changes or simplifications covered by the appended claims, such as, for example, a different torque distribution strategy, a lower number of driving wheels, etc.

The method and the vehicle described above offer numerous advantages.

In the first place, variable distribution of the braking action performed by the electric motors on each individual wheel during a braking in combination with a hydraulic situation such as ABS, depending on the dynamic situation, maximises, or in any case improves, the regenerative electrical energy during braking, also avoiding penalising the control action in a dynamic situation.

In conclusion, the control method described above is simple and economical to implement in a road vehicle 1 provided with a motor for each driving wheel, as it does not require the addition of any physical component and is completely obtainable via software in vehicles provided with at least two electric motors.

It is important to observe that the control method described above does not involve either a high computation capacity, nor an extended quantity of memory and it can therefore be implemented in a known control unit without the need for updates or upgrades.

### LIST OF REFERENCE NUMBERS OF THE FIGURES

- 1: road vehicle
- 2: front axle
- 3: rear axle
- 4: front wheels
- 5: rear wheels
- 6: powertrain system
- 7: electric motors
- 8: control circuitry
- 9: control or computation unit
- 10: suspension
- 11: shock absorber
- 12: data collection system
- 13: braking system
- 14: braking element
- 15: brake pedal
- 16: storage system
- 17: battery pack
- 18: hydraulic unit
- 19: mechanical brakes
- 4': right front wheel
- 4'': left front wheel
- 5': right rear wheel
- 5'': left rear wheel
- ABS: anti-lock braking system
- Ax: longitudinal acceleration
- AxR: driver's request
- Ay: transverse
- BC: battery operating conditions
- BV: base value
- DD: data on dynamics
- DR: driver
- eBT: first electric braking torque
- EMC: electric motor condition
- Fz: vertical load
- G: grip factor
- I': interval
- I'': interval
- mBT: mechanical braking torque
- MRT: maximum braking capacity
- PFS: priority functions and safety limitation
- Vx: longitudinal speed
- X: axis
- Y: axis
- Z: axis

## Claims

1. A control method for regenerative braking of a road vehicle (1) driven by a driver (DR); the road vehicle (1) comprising four wheels (4, 5), of which two or four wheels (4, 5) are driving, arranged in pairs on a front axle (2) and/or a rear axle (3), each of which is rotationally driven by a respective electric motor (7) connected to it; the method comprises the steps of:
- estimating, at least for each driving wheel (4, 5), independently of the other driving wheel(s) (4, 5), a respective grip factor (G) on the ground travelled by the road vehicle (1);
- defining or collecting, at least for each driving wheel (4, 5), independently of the other driving wheel(s) (4, 5), a respective vertical load (Fz) acting on it;
- computing, for each driving wheel (4, 5), a value of a maximum braking capacity (MRT) depending at least on the respective grip factor (G) and the respective vertical load (Fz);
- controlling a braking system (13), following a request for braking by the driver (DR), so as to actuate a hydraulic unit (18) to exert a first braking torque (mBT) at least on each driving wheel (4, 5);
- controlling the braking system (13), in addition to the respective first braking torque (mBT), so as to actuate in regenerative electric braking, by delivering a respective second braking torque (eBT), each driving wheel and thus the respective electric motor (7), at least according to the respective maximum braking capacity (MRT) value and in particular the first braking torque (mBT), so as to generate regenerative electrical energy;
- modulating, at least for each driving wheel (4, 5), the first braking torque (mBT) and/or the second braking torque (eBT) so that the sum of the first braking torque (mBT) and the second braking torque (eBT) is, instant by instant, equal to or less than the respective value (MRT) of maximum braking capacity;
- storing the regenerative electrical energy generated by the regenerative braking of each driving wheel (4, 5) in a vehicular electrical energy storage system (16).

2. Method according to claim 1, wherein the hydraulic unit (18) comprises an anti-lock braking system (ABS), which, when activated, determines the modulation of the first braking torque (mBT).

3. Method according to claim 2, wherein, during at least part, particularly during the totality, of the activation of the anti-lock braking system (ABS), i.e., during the modulation of the first torque (mBT), the second braking torque (eBT) is controlled at a respective base value (BV) constant for each driving wheel (4, 5).

4. Method according to claim 3, wherein the base value (BV) corresponds to a predefined percentage of the maximum braking capacity (MRT) of said driving wheel (4, 5).

5. Method according to claim 3 and comprising the further steps of:
- collecting a plurality of data (DD) on vehicular dynamics; and
- regulating the respective base value (BV) of the second braking torque (eBT) as a function of the data (DD) on vehicular dynamics.

6. Method according to any one of the previous claims, wherein during the modulating phase, for each drive wheel (4, 5), the second braking torque (eBT) is controlled in concordance with the respective value of the maximum braking capacity (MRT) of said driving wheel (4, 5).

7. Method according to claim 6, wherein the second torque (eBT) is commanded to correspond, under predefined conditions, to a predefined regenerative percentage of the respective value of the maximum braking capacity (MRT).

8. Method according to claim 7, wherein the predefined conditions comprise at least sections of the maximum braking capacity (MRT) which are constant and/or decreasing over time.

9. Method according to any one of the preceding claims, wherein during the phase of controlling the braking system (13), at least one right wheel and one left drive wheel (4, 5) of the same front and/or rear axle (2) are controlled independently of each other, distributing the regenerative braking between them differentially.

10. Method according to any one of the preceding claims, wherein the driving wheels (4, 5) are four, and wherein during the phase of controlling the braking system (13), the wheels (4, 5) of the front axle (2) and the wheels (4, 5) of the rear axle (3) are controlled independently of each other, distributing the regenerative braking differentially between the front axle (2) and the rear axle (3).

11. Method according to any one of the preceding claims, wherein the respective braking torque delivered by a wheel (4, 5) is dynamically time-varying, particularly with update frequencies greater than 5 Hz; more particularly with update frequencies of 10 Hz or more.

12. Method according to any one of the preceding claims, wherein the first braking torque (mBT) delivered by the hydraulic unit (18) is independent for each wheel (4, 5) of the front axle (2) and/or the rear axle (3), respectively, and/or between the wheel pair (4, 5) of the front axle and the wheel pair (4, 5) of the rear axle.

13. Electric road vehicle (1) comprising:
- a front axle (2) and a rear axle (3);
- four wheels (4, 5), of which two or four driving wheels (4, 5) arranged in pairs on a front axle (2) and/or a rear axle (3);
- a powertrain system (6) comprising two or four electric motors (7), or alternatively one or two electric motors connected to active differentials which in turn are each connected to two driving wheels (4, 5), each of the electric motors (7) being connected to a respective wheel (4, 5) or two wheels in the case of active differentials being present; where each wheel (4, 5) is rotatably driven by the respective electric motor (7) connected to it;
- an electronic control circuitry, which is configured for:
o estimating, for each driving wheel (4, 5), independently of the other driving wheel(s) (4, 5), a respective grip factor (G) on the ground travelled by the road vehicle (1);
o defining or collecting, for each driving wheel (4, 5), independently of the other driving wheel(s) (4, 5), a respective vertical load (Fz) acting on it;
o computing, for each driving wheel (4, 5), a value of a maximum braking capacity (MRT) depending at least on the respective grip factor (G) and the respective vertical load (Fz);
- a braking system (13), itself comprising at least one braking element (14) operable by the driver (DR) to request a braking, particularly a pedal; wherein the braking system (13) also comprises a hydraulic unit (18), and mechanical brakes, controlled by the hydraulic unit (18);
the braking system (13) being connected to the control circuitry (8) and configured to be controlled by it;
wherein the control circuitry (8) is also configured for:
controlling the braking system (13), following a request for braking by the driver (DR) via the braking element (14), so as to actuate the hydraulic unit (18) to exert a first braking torque (mBT) on at least each drive wheel (4, 5);
controlling the braking system (13), in addition to the respective first braking torque (mBT), to actuate in regenerative electric braking, by delivering a respective second braking torque (eBT), each driving wheel and thus the respective electric motor (7), as a function of the respective maximum braking capacity (MRT) value and especially the first braking torque (mBT), so as to generate regenerative electrical energy;
modulating, at least for each drive wheel (4, 5), the first braking torque (mBT) and/or the second braking torque (eBT) so that the sum of the first braking torque (mBT) and the second braking torque (eBT) is, instant by instant, equal to or less than the respective maximum braking capacity value (MRT); and
storing the regenerative electrical energy generated by the regenerative braking of each wheel (4, 5) in a vehicular electrical energy storage system (16).

14. Road vehicle (1) according to claim 13, wherein the control circuitry (8) is configured to carry out the method according to any of claims 1 to 12.
